(19) Europäisches Patentamt
European Patent Office
Office européen des brevets

(11) **EP 2 736 756 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(21) Anmeldenummer: **12726606.2**

(22) Anmeldetag: **01.06.2012**

(51) Int Cl.:
**H01M 10/42** *(2006.01)*    **H01M 10/48** *(2006.01)*

(86) Internationale Anmeldenummer:
**PCT/EP2012/060382**

(87) Internationale Veröffentlichungsnummer:
**WO 2013/013869 (31.01.2013 Gazette 2013/05)**

(54) **ENERGIESPEICHEREINRICHTUNG, SYSTEM MIT ENERGIESPEICHEREINRICHTUNG UND VERFAHREN ZUM BETREIBEN EINER ENERGIESPEICHEREINRICHTUNG**

ENERGY STORAGE DEVICE, SYSTEM HAVING AN ENERGY STORAGE DEVICE, AND METHOD FOR OPERATING AN ENERGY STORAGE DEVICE

DISPOSITIF D'ACCUMULATION D'ÉNERGIE, SYSTÈME DOTÉ D'UN DISPOSITIF D'ACCUMULATION D'ÉNERGIE ET PROCÉDÉ PERMETTANT DE FAIRE FONCTIONNER UN DISPOSITIF D'ACCUMULATION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2011 DE 102011079874**

(43) Veröffentlichungstag der Anmeldung:
**04.06.2014 Patentblatt 2014/23**

(73) Patentinhaber:
• **Robert Bosch GmbH**
  **70442 Stuttgart (DE)**
• **SAMSUNG SDI CO., LTD.**
  **Yongin-si, Gyeonggi-do**
  **446-577 (KR)**

(72) Erfinder:
• **KLAUSNER, Markus**
  **71229 Leonberg-Hoefingen (DE)**
• **DENNER, Volkmar**
  **72793 Pfullingen (DE)**
• **BUTZMANN, Stefan**
  **71717 Beilstein (DE)**

(74) Vertreter: **Bee, Joachim**
  **Robert Bosch GmbH**
  **Zentralabteilung Patente**
  **Postfach 30 02 20**
  **70442 Stuttgart (DE)**

(56) Entgegenhaltungen:
**WO-A1-2010/116671    JP-A- 2010 239 711**
**US-A- 5 960 898    US-A1- 2012 013 180**

**Beschreibung**

Die Erfindung betrifft eine Energiespeichereinrichtung, ein System mit einer Energiespeichereinrichtung und ein Verfahren zum Betreiben einer Energiespeichereinrichtung.

Stand der Technik

Es zeichnet sich ab, dass in Zukunft sowohl bei stationären Anwendungen, wie z.B. Windkraftanlagen oder Solaranlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. Elektrische Maschinen werden heute beispielsweise durch eine Zusammenstellung von Batteriezellen in Strängen angetrieben, wobei ein nachgeschalteter Wechselrichter die Versorgungsspannung der elektrischen Maschine bereitstellt.

Beispielsweise wird bei einer Einspeisung von Drehstrom in Versorgungsanschlüsse einer dreiphasigen elektrischen Maschine oder eines dreiphasigen Versorgungsnetzes über einen Umrichter in Form eines Pulswechselrichters eine von einem Gleichspannungszwischenkreis bereitgestellte Gleichspannung in eine dreiphasige Wechselspannung umgerichtet. Der Gleichspannungszwischenkreis wird seinerseits von einem Strang aus Batteriezellen gespeist. Um die für eine jeweilige Anwendung gegebenen Anforderungen an Leistung und Energie erfüllen zu können, werden mehrere Batteriezellen in Serie geschaltet.

Bei derartigen Ansätzen ist es wünschenswert, einzelne Batteriezellen selektiv in den Versorgungskreis zuzuschalten, um entweder in der nachgeschalteten elektronischen Leistungsstufe systemische Vorteile zu gewinnen oder einzelne Batteriezellen, welche alterungs- oder aufgabenbedingt mit der Zeit in ihrer Leistung nachlassen, gezielt aus dem Versorgungskreis zu entfernen. Batteriezellen altern aufgrund ihres Energie- und/oder Leistungsdurchsatzes, der Betriebstemperatur und weiterer Parameter. Durch fertigungsbedingte Schwankungen der Leistungsfähigkeit oder schwankende Umgebungsbedingungen der einzelnen Batteriezellen altern einige Batteriezellen schneller als andere Batteriezellen. Bei einer Vielzahl von zusammengeschalteten Batteriezellen kann es aufgrund der unterschiedlichen Alterungszustände zu einem Ungleichgewicht zwischen den einzelnen Batteriezellen kommen, so dass die schwächsten Batteriezellen die gesamte Leistungsfähigkeit des Versorgungskreises bestimmen. Die aus dem Stand der Technik bekannten zellspannungsbasierten Balancing-Verfahren unterscheiden hierbei nicht, ob ein Ungleichgewicht durch sehr hohe Leistungsentnahmen über kurze Zeitdauern oder geringe Leistungsentnahmen über längere Zeiträume verursacht wurden.

Offenbarung der Erfindung

Die vorliegende Erfindung schafft gemäß einer Ausführungsform eine Energiespeichereinrichtung zum Erzeugen einer n-phasigen Versorgungsspannung, wobei $n \geq 1$, mit einer Vielzahl von parallel geschalteten Energieversorgungszweigen, welche jeweils mit einem Ausgangsanschluss der Energiespeichereinrichtung verbunden sind, wobei die Energieversorgungszweige jeweils eine Vielzahl von in Reihe schaltbarer Energiespeichermodule, welche jeweils mindestens eine Energiespeicherzelle aufweisen, und einer Vielzahl von jeweils mit einem der Vielzahl von Energiespeichermodulen verbundenen Koppelmodulen, welche jeweils dazu ausgelegt sind, das jeweils verbundene Energiespeichermodul in den Energieversorgungszweig zu koppeln oder zu überbrücken, aufweisen, und einer Steuereinrichtung, welche mit den Koppelmodulen verbunden ist, und welche dazu ausgelegt ist, jedes der Koppelmodule in Abhängigkeit von einem Wert der Alterungsfunktionen jedes der Energiespeichermodule zum Koppeln des jeweils verbundenen Energiespeichermoduls in einen der Vielzahl von Energieversorgungszweigen anzusteuern.

Gemäß einer weiteren Ausführungsform schafft die vorliegende Erfindung ein Verfahren zum Betreiben einer erfindungsgemäßen Energiespeichereinrichtung, mit den Schritten des Erfassens von Betriebsparametern jedes der Energiespeichermodule, des Berechnens von Werten jeweils einer Alterungsfunktion für jedes der Energiespeichermodule auf der Basis der erfassten Betriebsparameter, des Ermittelns eines momentanen Lastbedarfs der Energiespeichereinrichtung, und, in Abhängigkeit von dem momentanen Lastbedarf, des Auswählens einer Gruppe von Energiespeichermodulen, welche zum Erzeugen der n-phasigen Versorgungsspannung herangezogen werden, auf der Basis der berechneten Werte der Alterungsfunktionen aller Energiespeichermodule.

In einer vorteilhaften Ausführungsform wird die Alterungsfunktion für jedes der Energiespeichermodule als monoton steigende Schadensakkumulationfunktion abgebildet, bei der jede Änderung eines alterungsbestimmenden Betriebsparameters zu einer Erhöhung des Wertes der Alterungsfunktion führt.

Die vorliegende Erfindung schafft gemäß einer weiteren Ausführungsform ein System mit einer q-phasigen elektrischen Maschine, wobei $q \geq 1$, einem Wechselrichter, welcher mit der elektrischen Maschine verbunden ist, und welcher dazu ausgelegt ist, eine q-phasige Wechselspannung für einen Betrieb der elektrischen Maschine zu erzeugen, und einer erfindungsgemäßen Energiespeichereinrichtung, welche mit dem Wechselrichter verbunden ist, und welche dazu ausgelegt ist, eine Versorgungsspannung für den Wechselrichter zu erzeugen.

Vorteile der Erfindung

Eine Idee der vorliegenden Erfindung ist es, Energiespeichermodule selektiv in verschiedene Energieversorgungszweige einer Energiespeichereinrichtung zu schalten, um an den Ausgangsanschlüssen der Energiespeichereinrichtung eine Gleichspannung zu erzeugen. Die selektive Zuschaltung der Energiespeichermodule hängt dabei von dem individuellen Zellalterungszustand der den jeweiligen Energiespeichermodulen zugeordneten Energiespeicherzellen ab. Der Zellalterungszustand jeder Energiespeicherzelle ergibt sich dabei aus einer zellindividuellen Alterungsfunktion, die von Betriebsparametern der Energiespeicherzelle abhängig ist, so dass der gesamte Zuschaltzustand über alle Energiespeichermodule bezüglich eines kumulierten Zellalterungszustands der zugeschalteten individuellen Energiespeicherzellen optimiert wird. Im Gegensatz zu den bekannten Balancing-Funktionen kann die kumulative Alterungsfunktion den unterschiedlichen Einfluss verschiedener Betriebsparameter inklusive Betriebsdauer und Standzeit auf die Alterung abbilden und dadurch eine Optimierung der Lebensdauer der Energiespeichereinrichtung ermöglichen.

Eine weitere Idee der vorliegenden Erfindung ist es, hierarchische Regelkreise zur selektiven Zuschaltung von Energiespeichermodulen in einer Energiespeichereinrichtung mit einer Vielzahl von parallel geschalteten Energieversorgungszweigen, welche eine Reihenschaltung einer Vielzahl von Energiespeichermodulen aufweisen, bereitzustellen. Dabei wird in einer ersten Hierarchiestufe ein kumulierter Zellalterungszustand der zugeschalteten individuellen Energiespeicherzellen eines Energieversorgungszweigs optimiert. In einer zweiten Hierarchiestufe erfolgt dann eine übergeordnete Optimierung des kumulierten Zellalterungszustands der zugeschalteten Energieversorgungszweige.

Ein Vorteil der Erfindung besteht darin, dass durch die Optimierung der Zuschaltzustände der Energiespeichermodule die Lebensdauer, die Leistungsfähigkeit sowie die Verfügbarkeit der gesamten Energiespeichereinrichtung erhöht wird. Dies wirkt sich insbesondere in Konstellationen aus, in denen die Energiespeichereinrichtung eine Versorgungsspannung für einen Verbraucher mit einer zeitlich stark variierenden Last erzeugen muss.

Ein weiterer Vorteil der Erfindung besteht darin, dass nicht nur der Momentanzustand der Energiespeicherzellen bei der Optimierung der Zuschaltzustände berücksichtigt wird, sondern insbesondere auch die individuelle Belastungshistorie der einzelnen Energiespeicherzellen. Dadurch kann die Zuschaltstrategie dynamisch an veränderte Betriebsumstände der Energiespeichereinrichtung angepasst werden.

Die erfindungsgemäßen Zuschaltstrategien können dabei in vorteilhafter Weise in jedem Betriebsmodus der Energiespeichereinrichtung umgesetzt werden. Beispielsweise können in einem Entladebetrieb der Energiespeichereinrichtung die Zuschaltzustände der zu einer Entladespannung der Energiespeichereinrichtung beitragenden Energiespeicherzellen optimiert werden. Alternativ können in einem Ladebetrieb der Energiespeichereinrichtung die Zuschaltzustände der mit einer Ladespannung beaufschlagten Energiespeicherzellen der Energiespeichereinrichtung optimiert werden. Auch ein Umladebetrieb, das heißt, ein Entladen erster Energiespeicherzellen zum Laden zweiter Energiespeicherzellen der Energiespeichereinrichtung, kann unter Berücksichtigung der erfindungsgemäßen Zuschaltstrategien durchgeführt werden.

Die jeweilige Alterungsfunktion eines Energiespeichermoduls kann vorzugsweise von dem zeitlichen Betriebstemperaturverlauf, dem zeitlichen Verlauf des Leistungsdurchsatzes, dem zeitlichen Verlauf des Energiedurchsatzes und/oder der kumulierten Betriebsdauer abhängig sein. Dies bietet den Vorteil, dass die für die Alterung eines Energiespeichermoduls bzw. der zugehörigen Energiespeicherzellen relevanten Betriebsparameter in die Berechnung der Alterungsfunktion miteinbezogen werden können, um eine präzise Bestimmung der Alterungshistorie jedes Energiespeichermoduls vornehmen zu können.

In einer vorteilhaften Ausführungsform kann die Steuereinrichtung dazu ausgelegt sein, den Wert der Alterungsfunktionen jedes Energiespeichermoduls in vorbestimmten Zeitabständen in Abhängigkeit von dem zeitlichen Betriebstemperaturverlauf, dem zeitlichen Verlauf des Leistungsdurchsatzes, dem zeitlichen Verlauf des Energiedurchsatzes, die kumulierte Standzeit ohne Energieentnahme und/oder der kumulierten Betriebsdauer des jeweiligen Energiespeichermoduls zu aktualisieren. Damit wird in vorteilhafter Weise eine dynamische Anpassung der Zuschaltstrategie auf den Momentanzustand möglich. Überdies kann dadurch Speicher- und Rechenkapazität eingespart werden, da die Alterungshistorie durch die iterative Aktualisierung der Alterungsfunktionen implizit bereits berücksichtigt werden kann.

Vorzugsweise kann die Steuereinrichtung eine Zellausgleichseinrichtung aufweisen, welche dazu ausgelegt ist, eine vorbestimmte Anzahl von Koppelmodulen in jeweils einem der Energieversorgungszweige zum Koppeln der jeweils den ausgewählten Koppelmodulen zugeordneten Energiespeichermodule in den Energieversorgungszweige derart auszuwählen, dass die Differenz aus den Summen der Werte der Alterungsfunktionen der jeweils den ausgewählten Koppelmodulen zugeordneten Energiespeichermodule des Energieversorgungszweiges minimal ist. Auf diese Weise kann ein zweigindividueller Ausgleich der Zuschaltstrategie für die Energiespeichermodule des Energieversorgungszweiges gemäß der ersten Hierarchiestufe realisiert werden.

Weiterhin kann gemäß einer vorteilhaften Ausführungsform jeder der Energieversorgungszweige weiterhin ein Zweigkoppelmodul aufweisen, welches jeweils zwischen die Koppelmodule und den Ausgangsanschluss gekoppelt ist, und die Steuereinrichtung kann eine Zweigausgleichseinrichtung aufweisen, welche dazu ausgelegt ist, eine vorbestimmte Anzahl von Zweigkoppelmodulen zum Koppeln der Energiespeichermodule der jeweils den ausgewählten Zweigkoppelmodulen zugeordneten Energieversorgungszweige an den Ausgangsanschluss derart auszuwählen, dass die Summe der Werte aller Alterungsfunktionen der Energiespeichermodule der jeweils den ausgewählten Zweigkoppelmodulen zugeordneten Energieversorgungszweige minimal ist. Dies ermöglicht in vorteilhafter Weise eine lastabhängige Auswahl von Energieversorgungszweigen, deren Energiespeichermodule am wenigsten stark gealtert sind, so dass ein zweigübergreifender Alterungsausgleich gemäß der zweiten Hierarchiestufe realisiert werden kann.

Weitere Merkmale und Vorteile von Ausführungsformen der Erfindung ergeben sich aus der nachfolgenden Beschreibung mit Bezug auf die beigefügten Zeichnungen.

Kurze Beschreibung der Zeichnungen

Es zeigen:

Fig. 1 eine schematische Darstellung eines Systems mit einer Energiespeichereinrichtung gemäß einer Ausführungsform der vorliegenden Erfindung, und

Fig. 2 eine schematische Darstellung eines Verfahrens zum Betreiben einer Energiespeichereinrichtung gemäß einer weiteren Ausführungsform der vorliegenden Erfindung.

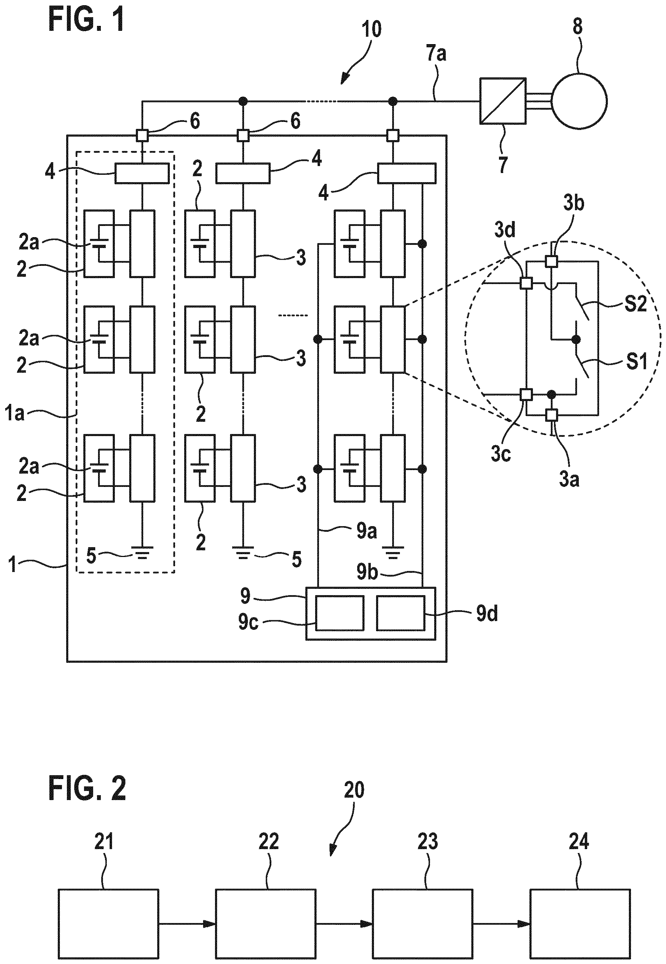

Fig. 1 zeigt eine schematische Darstellung eines Systems 10 mit einer Energiespeichereinrichtung 1. Die Energiespeichereinrichtung 1 umfasst eine Vielzahl von parallel geschalteten Energieversorgungszweigen 1a. Beispielhaft sind in Fig. 1 drei Energieversorgungszweige 1a gezeigt, wobei jede andere Anzahl an Energieversorgungszweigen 1a jedoch ebenso möglich sein kann. Aus Gründen der Übersichtlichkeit ist nur der linke Energieversorgungszweig 1a als solcher gekennzeichnet.

Jeder der Energieversorgungszweige 1a ist mit einem zugeordneten Ausgangsanschluss 6 verbunden, die jeweils an eine Versorgungsspannungsleitung 7a eines Wechselrichters 7 angeschlossen sind. In diesem Fall kann an jedem der Ausgangsanschlüsse 6 von dem jeweils angeschlossenen Energieversorgungszweig 1a eine Zweigspannung erzeugt werden. Der Wechselrichter 7 kann die von der Energiespeichereinrichtung 1 bereitgestellte Versorgungsspannung auf der Versorgungsspannungsleitung 7a in eine q-phasige Wechselspannung umrichten, welche dann einer q-phasigen elektrischen Maschine 8 zugeführt werden kann.

Alternativ kann es auch möglich sein, dass jeder der Ausgangsanschlüsse 6 mit einer separaten Versorgungsspannungsleitung 7a verbunden ist. In diesem Fall kann an jedem der Ausgangsanschlüsse 6 von dem jeweils angeschlossenen Energieversorgungszweig 1a eine Teilphasenspannung einer n-phasigen Versorgungsspannung der Energiespeichereinrichtung 1 erzeugt werden, welche dann ohne einen Wechselrichter 7 direkt den Phasenanschlüssen der q-phasigen elektrischen Maschine 8 zugeführt werden kann, wobei in dem speziellen Fall n = q sein kann. In der alternativen Ausführungsform kann die Energiespeichereinrichtung 1 eine integrierte Pulswechselrichterfunktion erfüllen.

Es kann beispielsweise auch möglich sein, dass statt der elektrischen Maschine 8 eine andere elektrische Last wie beispielsweise ein elektrisches Energienetz mit der Versorgungsspannung der Energiespeichereinrichtung 1 versorgt wird. Die Anzahl q der Phasen der elektrischen Maschine 8 ist in Fig. 1 nur beispielhaft mit drei dargestellt, jede andere Anzahl von Phasen größer als eins ist ebenso möglich.

Die Energieversorgungszweige 1a sind an ihrem Ende mit einem Bezugspotential 5 verbunden. Das Bezugspotential 5 kann beispielsweise jeweils ein Massepotential sein.

Die Energiespeichereinrichtung 1 umfasst eine Vielzahl von Koppelmodulen 3, welche in die Energieversorgungszweige 1a in Reihe geschaltet sind. In Fig. 1 sind beispielhaft drei Koppelmodule 3 je Energieversorgungszweig gezeigt, wobei jede andere Anzahl an Koppelmodulen 3 ebenso möglich ist. Jedem der Koppelmodule 3 ist ein Energiespeichermodul 2 zugeordnet. Die jeweiligen Energiespeichermodule 2 sind jeweils über zwei Versorgungsanschlüsse 3c, 3d mit dem zugeordneten der Koppelmodule 3 verbunden. Die Anzahl der Energiespeichermodule 2 korreliert dabei mit der Anzahl der Koppelmodule 3.

In dem Ausschnitt auf der rechten Zeichnungsseite der Fig. 1 ist ein beispielhafter Aufbau für ein Koppelmodul 3 gezeigt, welcher im Folgenden genauer erläutert wird. Die übrigen Koppelmodule 3 in Fig. 1 können analog aufgebaut sein. Aus Gründen der Übersichtlichkeit ist in Fig. 1 nur die Anordnung der Komponenten in einem der Koppelmodule 3 im Detail gezeigt.

Das Koppelmodul 3 umfasst eine erste Koppeleinrichtung S1 und eine zweite Koppeleinrichtung S2. Die ersten und die zweiten Koppeleinrichtungen S1 bzw. S2 können beispielsweise jeweils über zwei Halbleiterschalter bzw. Transistorschalter realisiert werden. Die ersten und die zweiten Koppeleinrichtungen S1 bzw. S2 können beispielsweise durch steuerbare Schaltelemente gebildet werden. Die Schaltelemente können dabei zum Beispiel als Leistungshalbleiterschalter, z.B. in Form von IGBTs (Insulated Gate Bipolar Transistors) oder als MOSFETs (Metal Oxide Semiconductor Field-Effect Transistors), ausgeführt sein. Dabei kann die Auslegung der ersten und die zweiten Koppeleinrichtungen S1 bzw. S2 bezüglich der Stromfestigkeit an die zugeordneten Energiespeichermodule 2 angepasst werden.

Die Koppeleinrichtungen S1 und S2 realisieren in Fig. 1 beispielhaft eine Halbbrückenschaltung. Wenn die erste Koppeleinrichtung S1 geschlossen und die zweite Koppeleinrichtung S2 geöffnet ist, erfolgt eine Überbrückung des an die Versorgungsanschlüsse 3c, 3d gekoppelten Energiespeichermoduls 2, so dass die Eingangsanschlüsse 3a und 3b des Koppelmoduls 3 direkt miteinander verbunden sind. Umgekehrt wird das Energiespeichermodul 2 über die Versorgungsanschlüsse 3c, 3d in den jeweiligen Energieversorgungszweig 1a gekoppelt, wenn die erste Koppeleinrichtung S1 geöffnet und die zweite Koppeleinrichtung S2 geschlossen ist.

Für einen Fachmann sollte es klar sein, dass weitere Koppeleinrichtungen in dem Koppelmodul 3 angeordnet werden können, um beispielsweise eine Vollbrückenschaltung des Koppelmoduls 3 zu realisieren. In diesem Fall kann dann auch eine Umpolung des Energiespeichermoduls 2 zwischen den Eingangsanschlüssen 3a und 3b des Koppelmoduls 3 erfolgen. Die weiteren Koppeleinrichtungen können dabei den ersten und die zweiten Koppeleinrichtungen S1 bzw. S2 ähnlich sein.

Die Energiespeichermodule 2 weisen jeweils mindestens eine Energiespeicherzelle 2a, beispielsweise eine Batteriezelle oder eine andere Energiespeichereinrichtung, auf, welche derart angeordnet ist, dass an den Versorgungsanschlüssen 3c, 3d eine Versorgungsspannung der Energiespeicherzelle 2a anliegt. Es kann auch vorgesehen sein, dass mehrere Energiespeicherzellen 2a zwischen die beiden Versorgungsanschlüsse 3c, 3d in Reihe geschaltet sind. Dabei kann es sein, dass jedes der Energiespeichermodule 2 eine identische Anordnung von Energiespeicherzellen 2a aufweist.

Durch eine entsprechende Ansteuerung der Koppeleinrichtungen S1 bzw. S2 der Koppelmodule 3 kann das zugeordnete Energiespeichermodul 2 daher selektiv entweder in einen der Energieversorgungszweige 1a geschaltet werden oder überbrückt werden. Dazu kann vorgesehen sein, dass die ersten und zweiten Koppeleinrichtungen S1 bzw. S2 jeweils paarweise geschaltet werden.

Die Teilspannungen der Energieversorgungszweige 1a werden durch den jeweiligen Schaltzustand der ersten und zweiten Koppeleinrichtungen S1 bzw. S2 bestimmt und können stufig eingestellt werden. Die Stufung ergibt sich dabei in Abhängigkeit von den bereitgestellten Einzelspannungen der Energiespeichermodule 2 und deren Anzahl. Insbesondere kann dabei die Summe aller Einzelspannungen der Energiespeichermodule 2 in einem Energieversorgungszweig 1a jeweils größer sein, als die maximale Teilspannung, die an einem der Ausgangsanschlüsse 6 der Energiespeichereinrichtung 1 bereitgestellt werden muss. Auf diese Weise reicht es aus, jeweils nur einen Teil der Energiespeichermodule 2 pro Energieversorgungszweig 1a zur Erzeugung der Teilspannungen an den Ausgangsanschlüssen 6 heranzuziehen. Die übrigen Energiespeichermodule 2 können dabei über die Koppelmodule 3 jeweils überbrückt werden.

Die Energiespeichereinrichtung 1 umfasst weiterhin eine Steuereinrichtung 9, welche mit den Koppelmodulen 3 über eine Steuerleitung 9b verbunden ist, und welche dazu ausgelegt ist, die ersten und zweiten Koppeleinrichtungen S1 bzw. S2 über entsprechende Steuersignale anzusteuern. Auf diese Weise kann es möglich sein, über die Steuereinrichtung 9 die ersten und zweiten Koppeleinrichtungen S1 bzw. S2 gezielt und koordiniert anzusteuern, um die Ausgangsspannung der Energiespeichereinrichtung 1 an den Ausgangsanschlüssen 6 der Energiespeichereinrichtung 1 entsprechend dynamisch einzustellen. Die Steuereinrichtung 9 ist weiterhin über eine Erfassungsleitung 9a mit den Energiespeichermodulen 2 verbunden, über welche Betriebsparameter der Energiespeichermodule 2 erfasst werden können. In Fig. 1 sind aus Gründen der Übersichtlichkeit jeweils nur eine Steuerleitung 9b und eine Erfassungsleitung 9a gezeigt, wobei es jedoch klar ist, dass die Energiespeichermodule 2 und Koppelmodule 3 der übrigen Energieversorgungszweige 1a in entsprechender Weise über Steuer- und Erfassungsleitungen mit der Steuereinrichtung 9 verbunden sind.

Wie im Folgenden mit Bezug auf das in Fig. 2 schematisch dargestellte Verfahren 20 zum Betreiben der Energiespeichereinrichtung 1 aus Fig. 1 gezeigt wird, kann auf diese Weise eine Auswahl der Energiespeichermodule 2 erfolgen, welche zur Erzeugung der Teilspannungen an den Ausgangsanschlüssen 6 verwendet werden. Die übrigen Energiespeichermodule 2 werden zur Erzeugung der Teilspannungen an den Ausgangsanschlüssen 6 nicht herangezogen. Diese Auswahl kann während des Betriebs der Energiespeichereinrichtung 1 verändert werden, so dass die Zusammensetzung der Gruppe an ausgewählten Energiespeichermodulen 2 flexibel ist. Die Auswahl hängt dabei insbesondere von der individuellen Alterung der Energiespeichermodule 2 ab.

Zur Beschreibung der Alterung der Energiespeichermodule 2 wird für jedes der Energiespeichermodule 2 eine Alterungsfunktion D berechnet:

$$D_x = f(U(t), I(t), T(t), \ldots),$$

wobei x einen Index des jeweiligen Energiespeichermoduls, U(t) den zeitlichen Spannungsverlauf der Ausgangsspannungen U des jeweiligen Energiespeichermoduls, I(t) den zeitlichen Stromstärkenverlauf der Ausgangsstromstärken I des jeweiligen Energiespeichermoduls und T(t) den zeitlichen Verlauf der Betriebstemperatur T des jeweiligen Energiespeichermoduls bezeichnen. Die Größen U(t), I(t), T(t), die Betriebsdauer t selbst sowie möglicherweise weitere Größen stellen dabei Betriebsparameter B der Energiespeichermodule 2 dar.

Die Betriebsparameter können in einem ersten Schritt 21 des Verfahrens erfasst werden. Dazu kann die Steuereinrichtung 9 der Energiespeichereinrichtung 1 die Betriebsparameter B beispielsweise über die Erfassungsleitung 9a von den Energiespeichermodulen erfassen. Es kann auch vorgesehen sein, dass in Abhängigkeit von Kenngrößen der Energiespeichereinrichtung 1 und Ansteuersignalen der Koppelmodule 3 in der Steuereinrichtung 9 auf die Betriebsparameter B zurückgeschlossen werden kann.

Der funktionale Zusammenhang f(B), welcher die Alterungsfunktion D bestimmt, kann dabei beispielsweise durch Lebensdauererprobungen unter Variation der Betriebsparameter B vorab ermittelt werden. Alternativ kann während des Betriebs der Energiespeichereinrichtung 1 in der Steuereinrichtung 9 ein Parameteridentifikationsverfahren durchgeführt werden, um den funktionalen Zusammenhang zu extrapolieren.

Die Alterungsfunktion D kann dabei jeweils als monoton steigende Summenschadensfunktion betrachtet werden, das heißt, jede Änderung einer Variablen führt zu einer Erhöhung der Alterungsfunktion D. Insbesondere bedeutet dies auch, dass eine bloße Alterung mit der Zeit ohne Beanspruchung des Energiespeichermoduls 2 zur Erzeugung einer Versorgungsspannung zu einer Erhöhung des Wertes der Alterungsfunktion D führt. Beispielsweise kann eine kumulierte Standzeit ohne Energieentnahme bestimmt werden, welche zu einer Erhöhung des Werts der Alterungsfunktion D beiträgt. Dabei wird berücksichtigt, dass eine Energiespeichermodul 2 auch im passiven Zustand, das heißt außerhalb des eigentlichen Betriebs altert.

Weiterhin korreliert die Alterungsfunktion D nicht mit momentan beobachteten Betriebsparametern der Energiespeichermodule 2, wie beispielsweise dem momentanen Ladungszustand der Energiespeichermodule. Während beispielsweise nach einem Lade- und Entladezyklus der gleiche Ladungszustand eines Energiespeichermoduls 2 wieder hergestellt werden kann, steigt der Wert der Alterungsfunktion D nach einem solchen Zyklus, da jedes Laden und Entladen das Energiespeichermodul 2 beansprucht und das Energiespeichermodul 2 entsprechend altert.

Vielmehr kann in obigem Beispiel über die Änderung des Werts der Alterungsfunktion D auf die Art der Beanspruchung in einem solchen Lade- und Entladezyklus geschlossen werden. Je stärker sich der Wert der Alterungsfunktion D ändert, desto schädlicher für die Lebensdauer des Energiespeichermoduls ist die spezielle Durchführung des Lade- und Entladezyklus gewesen. Auf diese Weise kann über die Änderung des Werts der Alterungsfunktion D auf den Einfluss verschiedener Betriebszustände auf die Energiespeichermodule 2 geschlossen werden. Beispielsweise hängt die Alterungsfunktion D von dem zeitlichen Verlauf des Leistungsdurchsatzes ab, das heißt von der Stromstärke und der Spannung pro Zeiteinheit. Je höher die Stromstärke und/oder die Spannung, desto höher ist der Leistungsdurchsatz und desto höher ist die Schädigung des Energiespeichermoduls. Die Alterungsfunktion D kann auch von dem zeitlichen Verlauf des Energiedurchsatzes abhängen, das heißt von der Stromstärke und der Spannung über die Zeit hinweg. Je länger hohe Spannungen und/oder Stromstärken an den Energiespeichermodulen anliegen, desto höher ist der Energiedurchsatz und desto höher ist die Schädigung des Energiespeichermoduls. Weiterhin kann die Alterungsfunktion D von der Betriebstemperatur T des Energiespeichermoduls abhängen. Wird das Energiespeichermodul vorrangig bei Betriebstemperaturen betrieben, welche außerhalb eines optimalen Bereichs liegen, das heißt, wenn die Betriebstemperatur eines Energiespeichermoduls lange Zeit zu heiß oder zu kalt ist, kann sich das negativ auf die Alterung des Energiespeichermoduls auswirken. Schließlich altert ein Energiespeichermodul auch im Ruhezustand, so dass auch die kumulierte Betriebsdauer eine schädigende Wirkung auf das Energiespeichermodul hat.

Das Berechnen der jeweiligen Alterungsfunktionen D für jedes der Energiespeichermodule 2 kann in einem Schritt 22 in der Steuereinrichtung 9 durchgeführt werden. Dabei kann es vorgesehen sein, dass die Werte der Alterungsfunktionen D iterativ aktualisiert werden, das heißt, dass nach einem Erfassen von Betriebsparametern eine Änderung der Alterungsfunktion D berechnet wird und der Wert der Änderung zu dem bisherigen Wert der Alterungsfunktion D addiert wird. Auf diese Weise muss jeweils nur ein Wert der Alterungsfunktion D pro Energiespeichermodul 2 in der Steuereinrichtung 9 gespeichert werden. Die Aktualisierung der Werte der Alterungsfunktionen D kann dabei in vorbestimmten, insbesondere periodischen Abständen vorgenommen werden.

In einem dritten Schritt 23 des Verfahrens 20 kann ein Ermitteln eines momentanen Lastbedarfs und/oder Spannungsbedarfs der elektrischen Maschine 8 vorgenommen werden. Der momentane Lastbedarf und/oder der momentane Spannungsbedarf geben die Randbedingungen vor, nach denen eine Auswahl einer Gruppe von Energiespeichermodulen 2 der Energiespeichereinrichtung 1 in Schritt 24 des Verfahrens getroffen werden kann. Die ausgewählte Gruppe von Energiespeichermodulen 2 wird dann jeweils zur Erzeugung von Teilspannungen an den Ausgangsanschlüssen 6 der Energiespeichereinrichtung 1 herangezogen, indem die Steuereinrichtung 9 die jeweils zugeordneten Koppelmodule 3 über die Steuerleitungen 9b entsprechend ansteuert. Die Zusammensetzung der Gruppe von Energiespeichermodulen 2 kann jeweils flexibel variieren, je nachdem wie sich seit der letzten Auswahl und in Abhängigkeit von den Randbedingungen die Werte der Alterungsfunktionen aller Energiespeichermodule 2 geändert haben.

Eine Auswahl der Energiespeichermodule 2 kann beispielsweise in zwei Hierarchiestufen erfolgen. In einer ersten Hierarchiestufe kann eine alterungsabhängige Optimierung der Auswahl der Energiespeichermodule 2 pro Energieversorgungszweig 1a erfolgen, in einem sogenannten "Cell Wear Balancing" (Zellalterungsausgleich). Hierzu kann die Steuereinrichtung 9 eine Zellausgleichseinrichtung 9c umfassen, welche dazu ausgelegt ist, eine vorbestimmte Anzahl von Koppelmodulen 3 in jeweils einem der Energieversorgungszweige 1a zum Koppeln der jeweils den ausgewählten Koppelmodulen 3 zugeordneten Energiespeichermodule 2 in den Energieversorgungszweig 1a derart auszuwählen, dass die Summe der Werte der Alterungsfunktionen D der jeweils den ausgewählten Koppelmodulen 3 zugeordneten Energiespeichermodule 2 des Energieversorgungszweiges 1a minimal ist.

Die Optimierungsfunktion kann dabei

$$\min_k \left| M^{-1} \cdot \sum_{i=1}^{M} D_i - D_k \right|, \quad k = 1,...,M$$

sein, wobei M in einer ersten Iterationsstufe die Anzahl m der Energiespeichermodule 2 in einem Energieversorgungszweig 1a darstellt. Dadurch kann zum Beispiel dasjenige Energiespeichermodul $k_1$ ausgewählt werden, welches den größten Wert der Alterungsfunktion $D_k$ aufweist, und dieses Energiespeichermodul wird nicht zur Erzeugung der Teilspannung an dem Ausgangsanschluss 6 des jeweiligen Energieversorgungszweigs 1a herangezogen. Iterativ können dann weitere der Energiespeichermodule 2 von der Auswahl ausgeschlossen werden, indem die Optimierungsfunktion erneut auf die verbleibenden M-1 Energiespeichermodule angewendet wird:

$$\min_k \left| (M-1)^{-1} \cdot \sum_{i=1}^{M-1} D_i - D_k \right|, \quad k = 1,...,M-1 \wedge k \neq k_1$$

In Abhängigkeit von den Randbedingungen, das heißt, von dem ermittelten momentanen Spannungsbedarf in dem betrachteten Energieversorgungszweig 1a kann diese Iteration dann solange fortgeführt werden, bis eine Gruppe von Energiespeichermodulen 2 übrig bleiben, die zur Erzeugung der Teilspannung an dem Ausgangsanschluss des betrachteten Energieversorgungszweig 1a herangezogen werden. Diese Gruppe von Energiespeichermodulen 2 weisen die derzeit geringste Alterung bzw. die momentan geringsten Schädigungen auf und können somit zum Zwecke des Alterungsausgleichs zwischen den Energiespeichermodulen 2 weiter beansprucht werden.

In einer zweiten Hierarchiestufe kann eine alterungsabhängige Optimierung der Auswahl ganzer Energieversorgungszweige 1a erfolgen, in einem sogenannten "Strang Wear Balancing" (Zweigalterungsausgleich). Hierzu kann jeder der Energieversorgungszweige 1a ein Zweigkoppelmodul 4 aufweisen, welches jeweils zwischen die Koppelmodule 3 und den Ausgangsanschluss 6 gekoppelt ist, und welches derart durch die Steuereinrichtung 9 angesteuert werden kann, dass ein kompletter Energieversorgungszweig 1a von dem Ausgangsanschluss 6 abgekoppelt oder an den Ausgangsanschluss 6 angekoppelt werden kann. Die Steuereinrichtung 9 kann hierbei eine Zweigausgleichseinrichtung 9d aufweisen, welche dazu ausgelegt ist, eine vorbestimmte Anzahl von Zweigkoppelmodulen 4 zum Koppeln der Energiespeichermodule 2 der jeweils den ausgewählten Zweigkoppelmodulen 4 zugeordneten Energieversorgungszweige 1a an den Ausgangsanschluss 6 derart auszuwählen, dass eine Differenz aus der Summe der Werte aller Alterungsfunktionen D der Energiespeichermodule 2 der jeweils den ausgewählten Zweigkoppelmodulen 4 zugeordneten Energieversorgungszweige 1a und der Summe der Werte aller Alterungsfunktionen D der Energiespeichermodule 2 der jeweils den nicht ausgewählten Zweigkoppelmodulen 4 zugeordneten Energieversorgungszweige 1a minimal ist.

Die Optimierungsfunktion kann dabei

$$\min_{k,j} \left| \left( \sum_{i=1}^{m} D_i \right)_k - \left( \sum_{h=1}^{m} D_h \right)_j \right|, \quad k = 1,...,z \wedge j = 1,...,z \wedge k \neq j$$

sein, wobei m die Anzahl der Energiespeichermodule 2 in einem Energieversorgungszweig 1a und z die Anzahl aller Energieversorgungszweige 1a bezeichnet. Mit anderen Worten, es werden diejenigen Energieversorgungszweige 1a ausgewählt, welche die kleinsten Summen der Werte der Alterungsfunktionen D ihrer zugeordneten Energiespeichermodule 2 aufweisen bzw. es werden diejenigen Energieversorgungszweige 1a nicht ausgewählt, welche die größten Summen der Werte der Alterungsfunktionen D ihrer zugeordneten Energiespeichermodule 2 aufweisen.

In Abhängigkeit von den Randbedingungen, das heißt, von dem ermittelten momentanen Leistungsbedarf kann die Anzahl der derart ausgewählten Energieversorgungszweige 1a variieren, so dass der momentane Leistungsbedarf der elektrischen Maschine 8 gedeckt werden kann.

In der ersten Hierarchiestufe kann also die Ausgangsspannung eines Energieversorgungszweiges 1a durch Auswahl einer Gruppe von Energiespeichermodulen 2 variiert werden. In der zweiten Hierarchiestufe kann die von der Energiespeichereinrichtung 1 bereitgestellte Leistung durch Auswahl einer Gruppe von Energieversorgungszweigen 1a variiert werden. Durch die hierarchischen Regelkreise kann das der Zellalterungsausgleich den inneren Regelkreis und der Zweigalterungsausgleich den äußeren Regelkreis bilden.

Das Verfahren 20 kann insbesondere in allen Betriebszuständen der Energiespeichereinrichtung 1 eingesetzt werden, beispielsweise in einem Ladebetrieb, einem Entladebetrieb und/oder einem Umladebetrieb. In jedem der Betriebsmodi der Energiespeichereinrichtung 1 kann das Verfahren vorteilhafterweise zur Verlängerung der Lebensdauer der einzelnen Energiespeichermodule 2 und somit zur Verlängerung der Lebensdauer der gesamten Energiespeichereinrichtung 1 beitragen.

**Patentansprüche**

1. Energiespeichereinrichtung (1) zum Erzeugen einer n-phasigen Versorgungsspannung, wobei n $\geq$ 1, mit:

   einer Vielzahl von parallel geschalteten Energieversorgungszweigen (1a), welche jeweils mit einem Ausgangsanschluss (6) der Energiespeichereinrichtung (1) verbunden sind, wobei die Energieversorgungszweige (1a) jeweils aufweisen:

   eine Vielzahl von in Reihe schaltbarer Energiespeichermodule (2), welche jeweils mindestens eine Energiespeicherzelle (2a) aufweisen; und
   einer Vielzahl von jeweils mit einem der Vielzahl von Energiespeichermodulen (2) verbundenen Koppelmodulen (3), welche jeweils dazu ausgelegt sind, das jeweils verbundene Energiespeichermodul (2) in den Energieversorgungszweig (1a) zu koppeln oder zu überbrücken; und

   einer Steuereinrichtung (9), welche mit den Koppelmodulen (3) verbunden ist, und welche dazu ausgelegt ist, jedes der Koppelmodule (3) in Abhängigkeit von einem Wert der Alterungsfunktionen (D) jedes der Energiespeichermodule (2) zum Koppeln des jeweils verbundenen Energiespeichermoduls (2) in einen der Vielzahl von Energieversorgungszweigen (1a) anzusteuern.

2. Energiespeichereinrichtung (1) nach Anspruch 1, wobei die jeweilige Alterungsfunktion (D) eines Energiespeichermoduls (2) von dem zeitlichen Betriebstemperaturverlauf, dem zeitlichen Verlauf des Leistungsdurchsatzes, dem zeitlichen Verlauf des Energiedurchsatzes, der Standzeit ohne Energieentnahme und/oder der kumulierten Betriebsdauer abhängig ist.

3. Energiespeichereinrichtung (1) nach einem der Ansprüche 1 und 2, wobei die Steuereinrichtung (9) dazu ausgelegt ist, den Wert der Alterungsfunktionen (D) jedes Energiespeichermoduls (2) in vorbestimmten Zeitabständen in Abhängigkeit von dem zeitlichen Betriebstemperaturverlauf, dem zeitlichen Verlauf des Leistungsdurchsatzes, dem zeitlichen Verlauf des Energiedurchsatzes, der Standzeit ohne Energieentnahme und/oder der kumulierten Betriebsdauer des jeweiligen Energiespeichermoduls (2) zu aktualisieren.

4. Energiespeichereinrichtung (1) nach einem der Ansprüche 1 bis 3, wobei die Steuereinrichtung (9) aufweist:

   eine Zellausgleichseinrichtung (9c), welche dazu ausgelegt ist, eine vorbestimmte Anzahl von Koppelmodulen (3) in jeweils einem der Energieversorgungszweige (1a) zum Koppeln der jeweils den ausgewählten Koppelmodulen (3) zugeordneten Energiespeichermodule (2) in den Energieversorgungszweige (1a) derart auszuwählen, dass die Differenz aus den Werten der Alterungsfunktionen (D) der jeweils den ausgewählten Koppelmodulen (3) zugeordneten Energiespeichermodule (2) des Energieversorgungszweiges (1a) minimal ist.

5. Energiespeichereinrichtung (1) nach einem der Ansprüche 1 bis 4, wobei jeder der Energieversorgungszweige (1a) weiterhin ein Zweigkoppelmodul (4) aufweist, welches jeweils zwischen die Koppelmodule (3) und den Ausgangsanschluss (6) gekoppelt ist, und
   wobei die Steuereinrichtung (9) aufweist:

   eine Zweigausgleichseinrichtung (9d), welche dazu ausgelegt ist, eine vorbestimmte Anzahl von Zweigkoppelmodulen (4) zum Koppeln der Energiespeichermodule (2) der jeweils den ausgewählten Zweigkoppelmodulen (4) zugeordneten Energieversorgungszweige (1a) an den Ausgangsanschluss (6) derart auszuwählen, dass die Differenz aus der Summe der Werte aller Alterungsfunktionen (D) der Energiespeichermodule (2) der jeweils den ausgewählten Zweigkoppelmodulen (4) zugeordneten Energieversorgungszweige (1a) und der Summe der Werte aller Alterungsfunktionen (D) der Energiespeichermodule (2) der jeweils den nicht ausgewählten Zweigkoppelmodulen (4) zugeordneten Energieversorgungszweige (1a) minimal ist.

**6.** System, mit:

einer q-phasigen elektrischen Maschine (8), wobei q ≥ 1;
einem Wechselrichter (7), welcher mit der elektrischen Maschine (8) verbunden ist, und welcher dazu ausgelegt ist, eine q-phasige Wechselspannung für einen Betrieb der elektrischen Maschine (8) zu erzeugen; und
einer Energiespeichereinrichtung (1) nach einem der Ansprüche 1 bis 5, welche mit dem Wechselrichter (7) verbunden ist, und welche dazu ausgelegt ist, eine Versorgungsspannung für den Wechselrichter (7) zu erzeugen.

**7.** Verfahren (20) zum Betreiben einer Energiespeichereinrichtung (1) nach einem der Ansprüche 1 bis 5 zum Erzeugen einer Versorgungsspannung, mit den Schritten:

Erfassen (21) von Betriebsparametern (B) jedes der Energiespeichermodule (2);
Berechnen (22) von Werten jeweils einer Alterungsfunktion (D) für jedes der Energiespeichermodule (2) auf der Basis der erfassten Betriebsparameter (B);
Ermitteln (23) eines momentanen Lastbedarfs des elektrischen Verbrauchers (8); und
in Abhängigkeit von dem momentanen Lastbedarf, Auswählen (24) einer Gruppe von Energiespeichermodulen (2), welche zum Erzeugen der n-phasigen Versorgungsspannung herangezogen werden, auf der Basis der berechneten Werte der Alterungsfunktionen (D) aller Energiespeichermodule (2).

**8.** Verfahren (20) nach Anspruch 7, wobei die Betriebsparameter (B) einen zeitlichen Betriebstemperaturverlauf, einen zeitlichen Verlauf des Leistungsdurchsatzes, einen zeitlichen Verlauf des Energiedurchsatzes, eine kumulierte Standzeit ohne Energieentnahme und/oder eine kumulierte Betriebsdauer jedes der Energiespeichermodule (2) umfassen.

**9.** Verfahren (20) nach einem der Ansprüche 7 und 8, wobei das Berechnen der Werte der Alterungsfunktionen (D) ein Aktualisieren der bisherigen Werte der Alterungsfunktionen (D) auf der Basis der erfassten Betriebsparameter (B) umfasst.

**10.** Verfahren (20) nach einem der Ansprüche 7 bis 9, wobei die Energiespeichereinrichtung (1) in einem Ladebetrieb, in einem Entladebetrieb oder in einem Umladebetrieb betrieben wird.

**Claims**

**1.** Energy storage device (1) for generating an n-phase supply voltage, wherein n ≥ 1, having:

a plurality of parallel connected energy supply strings (1a) that are connected in each case to an output connector (6) of the energy storage device (1), wherein the energy supply strings (1a) comprise in each case:

• a plurality of energy storage modules (2) that can be series connected and that comprise in each case at least one energy storage cell (2a); and
• a plurality of coupling modules (3) that are connected in each case to one of the plurality of energy storage modules (2), which coupling modules are designed in each case so as to couple the respective connected energy storage module (2) into the energy supply string (1a) or to bridge said energy storage module (2); and

a control device (9) that is connected to the coupling modules (3) and that is designed so as to control each of the coupling modules (3) in dependence upon a value of the aging functions (D) of each of the energy storage modules (2) for the purpose of coupling the respective connected energy storage module (2) into one of the plurality of energy supply strings (1a).

**2.** Energy storage device (1) according to Claim 1, wherein the respective aging function (D) of an energy storage module (2) is dependent upon the progression with respect to time of the operating temperature, the progression with respect to time of the power output, the progression with respect to time of the energy output, the service life without energy consumption and/or the cumulative operating time.

**3.** Energy storage device (1) according to either one of Claims 1 and 2, wherein the control device (9) is designed so as to update the value of the aging functions (D) of each energy storage module (2) at predetermined time intervals in dependence upon the progression with respect to time of the operating temperature, the progression with respect to time of the power output, the progression with respect to time of the energy output, the service life without energy consumption and/or the cumulative operating time of the respective energy storage module (2).

4. Energy storage device (1) according to any one of Claims 1 to 3, wherein the control device (9) comprises:

a cell balancing device (9c) that is designed so as to select a predetermined number of coupling modules (3) in each one of the energy supply strings (1a) for the purpose of coupling the energy storage modules (2) that are allocated in each case to the selected coupling modules (3) into the energy supply strings (1a) in such a manner that the difference is minimal between the values of the aging functions (D) of the energy storage modules (2) of the energy supply string (1a), which energy storage modules are allocated in each case to the selected coupling modules (3).

5. Energy storage device (1) according to any one of Claims 1 to 4, wherein each of the energy supply strings (1a) furthermore comprises a string coupling module (4) that is coupled in each case between the coupling modules (3) and the output connector (6), and
wherein the control device (9) comprises:

a string balancing device (9d) that is designed so as to select a predetermined number of string coupling modules (4) for the purpose of coupling the energy storage modules (2) of the energy supply strings (1a) that are allocated in each case to the selected string coupling modules (4) to the output connector (6) in such a manner that the difference is minimal between the total of the values of all aging functions (D) of the energy storage modules (2) of the energy supply strings (1a) that are allocated in each case to the selected coupling modules (4) and the total of the values of all aging functions (D) of the energy storage modules (2) of the energy supply strings (1a) that are allocated in each case to the non-selected string coupling modules (4).

6. System, having:

a q-phase electric machine (8), wherein q ≥ 1;
an AC converter (7) that is connected to the electric machine (8) and that is designed so as to generate a q-phase AC voltage for operating the electric machine (8); and
an energy storage device (1) according to any one of Claims 1 to 5, which storage device is connected to the AC converter (7) and is designed so as to generate a supply voltage for the AC converter (7).

7. Method (20) for operating an energy storage device (1) according to any one of Claims 1 to 5 for generating a supply voltage, said method having the steps:

• determining (21) operating parameters (B) of each of the energy storage modules (2);
• calculating (22) values in each case of an aging function (D) for each of the energy storage modules (2) on the basis of the determined operating parameters (B),
• determining (23) a prevailing load requirement of the electrical consumer (8); and
• in dependence upon the prevailing load requirement, selecting (24) a group of energy storage modules (2) that are used to generate the n-phase supply voltage on the basis of the calculated values of the aging functions (D) of all energy storage modules (2).

8. Method (20) according to Claim 7, wherein the operating parameters (B) comprise a progression with respect to time of the operating temperature, a progression with respect to time of the power output, a progression with respect to time of the energy output, a cumulative service life without energy consumption and/or a cumulative operating time of each of the energy storage modules (2).

9. Method (20) according to either one of Claims 7 and 8, wherein the process of calculating the values of the aging functions (D) includes updating the previous values of the aging functions (D) on the basis of the determined operating parameters (B).

10. Method (20) according to any one of Claims 7 to 9, wherein the energy storage device (1) is operated in a charging operation, in a discharging operation or in a discharging/charging operation.

**Revendications**

1. Dispositif d'accumulation d'énergie (1) destiné à générer une tension d'alimentation à n phases, avec n > 1, comportant :

   une pluralité de branches d'alimentation en énergie (1a) connectées en parallèle, qui sont respectivement reliées à une borne de sortie (6) du dispositif d'accumulation d'énergie (1), dans lequel les branches d'alimentation en énergie (1a) comportent respectivement :

   une pluralité de modules d'accumulation d'énergie (2) pouvant être connectés en série, qui comprennent respectivement au moins une cellule d'accumulation d'énergie (2a) ; et
   une pluralité de modules de couplage (3) reliés respectivement reliés à l'un de la pluralité de modules d'accumulation d'énergie (2), lesquels modules de couplage sont conçus pour coupler ou surmonter le module d'accumulation d'énergie (2) respectivement relié dans la branche d'alimentation en énergie (1a) ; et
   un dispositif de commande (9) qui est relié aux modules de couplage (3) et qui est conçu pour commander chacun des modules de couplage (3) en fonction d'une valeur des fonctions de vieillissement (D) de chacun des modules d'accumulation d'énergie (2), pour coupler le module d'accumulation d'énergie (2) respectivement relié dans l'une de la pluralité de branches d'alimentation en énergie (1a).

2. Dispositif d'accumulation d'énergie (1) selon la revendication 1, dans lequel la fonction de vieillissement (D) respective d'un module d'accumulation d'énergie (2) dépend de l'évolution temporelle de la température de fonctionnement, de l'évolution temporelle du débit de puissance, de l'évolution temporelle du débit d'énergie, de la durée de vie sans consommation d'énergie et/ou de la durée de fonctionnement cumulée.

3. Dispositif d'accumulation d'énergie (1) selon l'une des revendications 1 et 2, dans lequel le dispositif de commande (9) est conçu pour actualiser la valeur des fonctions de vieillissement (D) de chaque module d'accumulation d'énergie (2) à des intervalles de temps prédéterminés en fonction de l'évolution temporelle de la température de fonctionnement, de l'évolution temporelle du débit de puissance, de l'évolution temporelle du débit d'énergie, de la durée de vie sans consommation d'énergie et/ou de la durée de fonctionnement cumulée du module d'accumulation d'énergie (2).

4. Dispositif de stockage d'énergie (1) selon l'une des revendications 1 à 3, dans lequel le dispositif de commande (9) comporte :

   un dispositif d'équilibrage de cellule (9c) qui est conçu pour sélectionner un nombre prédéterminé de modules de couplage (3) dans l'une, respective, des branches d'alimentation en énergie (1a) afin de couplé les modules d'accumulation d'énergie (2) respectivement associés aux modules de couplage (3) sélectionnés dans les branches d'alimentation en énergie (1a) de telle sorte que la différence entre les valeurs des fonctions de vieillissement (D) des modules d'accumulation d'énergie (2) respectivement associés aux modules de couplage (3) sélectionnés de la branche d'alimentation en énergie (1a) soit minimale.

5. Dispositif d'accumulation d'énergie (1) selon l'une des revendications 1 à 4, dans lequel chacune des branches d'alimentation en énergie comprend.en outre un module de couplage de branche (4) qui est respectivement couplé entre les modules de couplage (3) et la borne de sortie (6), et
   dans lequel le dispositif de commande (9) comprend :

   un dispositif de compensation de branche (9d) qui est conçu pour sélectionner un nombre prédéterminé de modules de couplage de branche (4) afin de coupler les modules d'accumulation d'énergie (2) des branches d'alimentation en énergie (4) respectivement associées aux modules de couplage de branche (4) sélectionnés à la borne de sortie (6) de telle sorte que la différence entre la somme des valeurs de toutes les fonctions de vieillissement (D) des modules d'accumulation d'énergie (2) des branches d'alimentation en énergie (1a) respectivement associées aux modules de couplage de branche (4) sélectionnés et la somme des valeurs de toutes les fonctions de vieillissement (D) des modules d'accumulation d'énergie (2) des branches d'alimentation en énergie (1a) respectivement associées aux modules de couplage de branche (4) non sélectionnés soit minimale.

6. Système, comportant :

une machine électrique à q phases (8), avec q > 1 ;

un onduleur (7)'qui est relié à la machine électrique (8) et qui est conçu pour générer une tension alternative à q phases pour faire fonctionner la machine électrique (8) ; et

un dispositif d'accumulation d'énergie (1) selon l'une des revendications 1 à 5, qui est relié à l'onduleur (7) et qui est conçu pour générer une tension d'alimentation pour l'onduleur (7).

7. Procédé (20) de mise en fonctionnement d'un dispositif d'accumulation d'énergie (1) selon l'une des revendications 1 à 5 pour générer une tension d'alimentation, comportant les étapes suivantes :

   détecter (21) des paramètres de fonctionnement (B) de chacun des modules d'accumulation d'énergie (2) ;

   calculer (22) des valeurs d'une fonction de vieillissement (D) respective pour chacun des modules d'accumulation d'énergie (2) sur la base des paramètres de fonctionnement détectés (B) ;

   déterminer (23) une demande de charge instantanée du dispositif consommateur électrique (8) ; et

   en fonction de la demande de charge instantanée, sélectionner (24) un groupe de modules d'accumulation d'énergie (2) qui sont utilisés pour générer la tension d'alimentation à n phases, sur la base des valeurs calculées des fonctions de vieillissement (D) de tous les modules d'accumulation d'énergie (2).

8. Procédé (20) selon la revendication 7, dans lequel les paramètres de fonctionnement (B) comprennent une évolution temporelle de la température de fonctionnement, une évolution temporelle du débit de puissance, une évolution temporelle du débit d'énergie, une durée de vie cumulée sans consommation d'énergie et/ou un temps de fonctionnement cumulé de chacun des modules d'accumulation d'énergie (2).

9. Procédé (20) selon l'une des revendications 7 et 8, dans lequel le calcul des valeurs des fonctions de vieillissement (D) consiste à actualiser les valeurs précédentes des fonctions de vieillissement (D) sur la base des paramètres de fonctionnement détectés (B).

10. Procédé (20) selon l'une des revendications 7 à 9, dans lequel le dispositif d'accumulation d'énergie (1) est mis en fonctionnement en mode de charge, en mode de décharge ou en mode de recharge.

**FIG. 1**

**FIG. 2**